# EUROPEAN PATENT APPLICATION

(11) **EP 3 885 426 A1**
(43) Date of publication of application: **29.09.2021**
(21) Application number: 20165669.1
(22) Date of filing: 25.03.2020
(51) Int. Cl.: C12G 3/04, C12H 1/07

(54) **A PROCESS FOR THE PRODUCTION OF VODKA**

(71) Applicant: ZHS IP Europe Sàrl, 1260 Nyon (CH)
(72) Inventor: SCHEFLER, Yuri, 3963 Crans-Montana (CH)
(74) Representative: Mayr, Claus-Michael

(57) **Abstract**

An improved process is provided to prepare vodka with excellent properties comprising mixing water and ethyl alcohol, treating the mixture with activated coal followed by filtration and, optionally, adding sugar. The mixture of water and alcohol is cooled down to a temperature of about - 18°C, at which temperature the mixture is maintained for at least 4-8 hours. The resulting mixture is finally cold-filtered at said low-temperature and then allowed to gradually adapt to room temperature. Said optional sugar is added to the filtrate and the obtained vodka product mixture may be filtered again before bottling. The vodka comprises particularly merely an alcoholic strength by volume of between 37,5 vol% and 50 vol%, particularly of about 40 vol%, and between 1 and 2 g/l sugar.

## Description

The present invention relates a process for a production of vodka, comprising mixing water and alcohol to obtain a water-alcohol mixture, cooling down the mixture of water and alcohol to a temperature at least - 10°C, and maintaining said mixture at said temperature for several hours before cold-filtering said mixture. At this instance it is noticed that within the scope of the present application the expression "alcohol" is used to denote ethyl alcohol (ethanol), unless explicitly indicated otherwise or evident from the context.

At present, a widely known method of production of vodka still uses merely standard carbon filtering at room temperature of the water-alcohol mixture used for vodka production. This known method uses rather simple technology and the vodka produced by this method has relatively poor organoleptic parameters. Moreover, during the process contaminants may settle in the filter, particularly activated coal, decreasing its activity and adsorbing capabilities. Eventually this may deteriorate the filtration level of the mixture and the obtained vodka may still contain residual traces of fusel oils or other undesired contaminants. Any flavours of the product, moreover, eventually may evaporate with time and, accordingly, an alcoholic aftertaste manifest itself in the odour and taste.

So far the best and purest Vodka spirit on the market is produced by a process as described in European patent EP 1.549.734 that was granted to applicant. This process includes a cold-filtration step at a temperature of at least -10°C after the alcohol-water mixture was maintained at this low temperature for several hours. This process allows fusel oils and other impurities to settle and possibly to crystalize which significantly enhances the subsequent filtration step. As a result the final vodka-product is substantially void of any impurities that may affect its organoleptic properties, which manifest itself a very pleasant and smooth taste.

The present invention has inter alia for its object to further improve the latter process for producing vodka of even higher quality and unprecedented taste.

In order to achieve said object a process for producing vodka as described in the opening paragraph, according to the invention, is characterized in that said mixture is cooled down to a temperature of at least approximately -18°C and maintained at said temperature for at least 4 hours, and preferably for about 8 hours, prior to cold-filtering said mixture substantially at said low temperature, particularly over a carbon filter, particularly a Z-carbon filter.

Profound cooling to the temperature of -18°C, or less, considerably increases the density of the water-alcohol mixture, and leads to formation on walls of the cooler of a fine crystalline film being a mixture of aldehydes and other micro-contaminations,. Filtration at such low temperature still better purifies the water-alcohol mixture while not destroying the molecular system water-alcohol formed at cooling of the water-alcohol mixture. The same aim is attained by gradual natural warming of the mixture after filtration with an appropriate time lag.

Spectrometric absorption and translucency tests have shown that the Vodka that is produced this way, after having maintained at about 4 hours at a temperature of at least -18 before cold-filtering, shows a sudden significant further drop of the impurity level. As a result, the final water/alcohol mixture is almost void of contamination that could otherwise harm the organoleptic properties of the final product.

A preferred embodiment of the process according to the invention is characterized in that said mixture is maintained at approximately -18°C for about 8 hours before cold-filtering said mixture. Although cooling down to said minimal temperature for 4 hours already results in a significant improvement over the prior art, maintaining the water/alcohol mixture at least 4 hours longer appear to provide a slight further level of purity. In this respect, a specific embodiment of the process according to the invention is characterized in that said mixture has an alcoholic strength by volume of between 37,5 vol% and 50 vol%, particularly of about 40 vol%.

In order to provide the final product with an elegant taste and distinct organoleptic character, a specific embodiment of the process according to the invention is characterized in that sugar is added to the mixture after filtration. Optionally one or more additives may be added to the mixture after filtration under the prevailing EU and US regulations, provided that said additives are taken from a group containing sugar (syrup) and natural flavouring compounds, present in the distillate and obtained from the fermented raw materials. Such additives may provide a distinctive taste and nose to the vodka that distinguishes the product over other vodka's.

A specific embodiment of the process according to the invention, in this respect, is characterized in that said mixture consists of merely:
- a percentage of absolute alcohol in water of between about 37,5 vol% and 50 vol%, particularly around 40 vol% absolute alcohol; and
- between 1 and 2 g/l sugar, particularly about 1,2 g/l sugar.
Due to the unprecedented quality of the starting alcohol, merely sugar need be added to slightly refine the taste and character of the emanating of the vodka product. In order to remove any residual contaminations in the final product, a further preferred embodiment of the process according to the invention is characterized in that said obtained mixture is filtered at room temperature prior to bottling, particularly over a series of micro-filters.

Preferably, the filtrate is adapted to room temperature by pumping the filtrate to a non-isolated tank until room temperature has been attained. Normally room temperature will be in the range of between about 18°C and 25°C. In a further preferred embodiment of the process of the invention the resulting mixture at room temperature is filtered over a series of micro filters before bottling, preferably immediately before bottling.

Preferably, water for the water-alcohol mixture is obtained by mixing softened water and water treated by the method of reverse osmosis, normalized by the alkalinity parameter within about 2-3 meq/l. Throughout this patent application the wording alkalinity characteristic has been defined as volume in ml of hydrochloric acid with a concentration 0.1 M (i.e. 0.1 Mol/I) of HCl used for titration of 100 ml sample. Furthermore, the water-alcohol mixture is preferably treated with activated coal in the coal column at a filtration rate of 40-50 decaliters/hour.

The invention will now be described along the lines of a number of comparative examples.

A Vodka product is prepared using ethyl alcohol (ethanol) "Lux" and water obtained by mixing softened water with water preliminarily treated by the method of reverse osmosis, normalized by a parameter of alkalinity within 2-3 meq/l. Alcohol or spirit "Lux" has been described in the State Standard of the Russian Federation no. GOST 5962-2013. Ethyl alcohol "Lux" may be produced from various sorts of grains and mix of grain and potatoes. A volume of starch in the mix preferably does not exceed 60% for production of ethyl alcohol "Lux".

### Experimental Setup;

In a mixing tank, the alcohol and water are mixed to obtain the mixture of about 40 vol% absolute alcohol content. This mixture is passed through a column with activated coal at the filtration rate of 400-500 litre/hour. The filtered water-alcohol mixture is passed through a heat exchanger to decrease its temperature. The cooled mixture is then kept in the heat isolated tank for a duration of several hours. In this manner five batches are formed, three (A,B,C) of which resemble a prior art production process and two (D,E) are in accordance with the present invention. These batches are as follows:

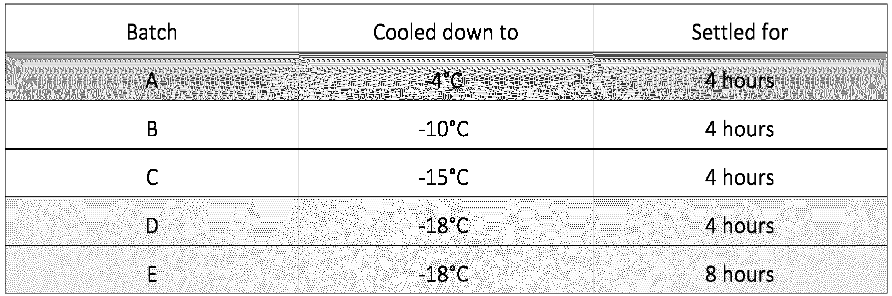

After having settled at the indicated temperature during the indicated time, the cold mixture is filtered through a Z-carbon filter. The temperature of the mixture thereby increases by the order of between 6 and 10 degrees. Finally the obtained filtrate is pumped to a non-isolated tank for allowing the mixture to gradually attain room temperature at between 18°C and 25 °.

All batches of the obtained water-alcohol mixture are finished by merely adding a same amount of 65.8% sugar syrup. The obtained composition is kept for one to five hours and then the produced vodka is consecutively filtered through a series of micro filters and before bottling.

The batches A-E were subjected to a series of tests. In order to analyse the chemical purity of the different batches samples thereof were taken and the optical absorption A was measured at a wavelength of 220 nm, 230 nm, 240 nm and 270 nm, respectively, pursuant to the methodology as stated in EU regulation 625/2003 Annex IV, method 12. Moreover the optical translucency T was measured at 364 nm. These wavelengths correspond to those at which absorption may be expected by the suspected impurities in the samples. The results of these absorption/translucency test are as follows:

| Sample | | Absorption, A | | | |
|---|---|---|---|---|---|
| | | 220 nm | 230 nm | 240 nm | 270 nm |
| A | (-4°C, 4 hours) | 0,2295 | 0,1532 | 0,1204 | 0,0916 |
| B | (-10°C, 4 hours) | 0,2014 | 0,1344 | 0,0969 | 0,0687 |
| C | (-15°C, 4 hours) | 0,199 | 0,1317 | 0,0947 | 0,0675 |
| D | (-18°C, 4 hours) | 0,1815 | 0,1214 | 0,0856 | 0,0599 |
| E | (-18°C, 8 hours) | 0,1794 | 0,1143 | 0,0824 | 0,0595 |

| | Sample | Translucency 364 nm |
|---|---|---|
| A | (-4°C, 4 hours) | 89,59 |
| B | (-10°C, 4 hours) | 89,81 |
| C | (-15°C, 4 hours) | 89,76 |
| D | (-18°C, 4 hours) | 89,95 |
| E | (-18°C, 8 hours) | 90,01 |

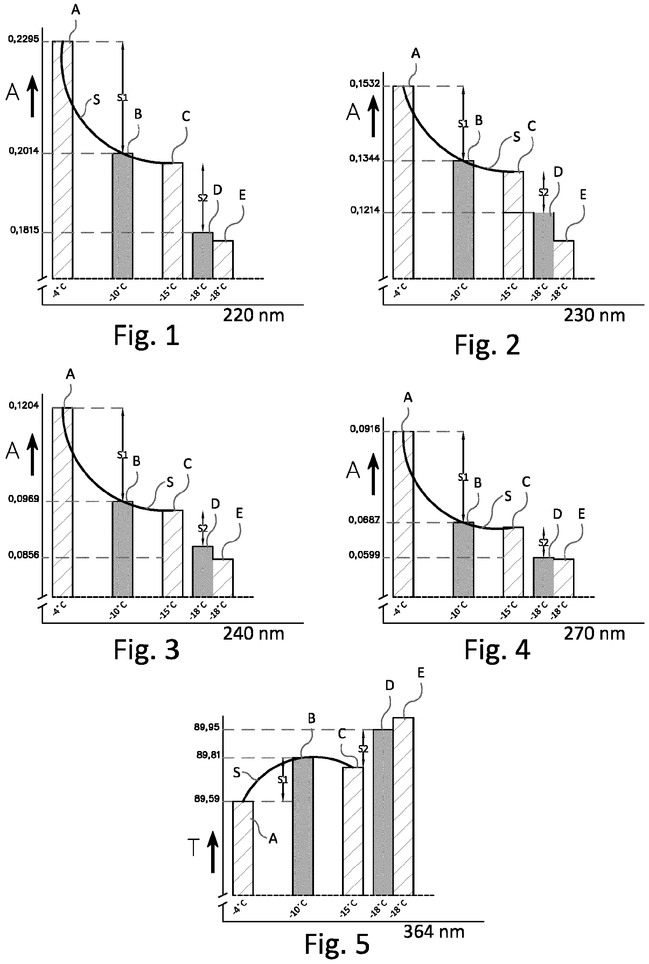

These results have been depicted in the graphs of figures 1-5. Clearly, at every wavelength, the absorption drops significantly by a step S1 if cold-filtered at a temperature between -10°C and - 15°C, compared to cold filtering at higher temperature like at -4°C. Within the range of -10°C and -15°C substantially a same absorption was measured, as shown in figures 1-4, suggesting that lowering the temperature will not result in a substantial further improvement. This trend has been illustrated by a curve S in the figures that is fitted through the points at -4°C -10°C and -15°C. However, at -18°C an unexpected further drop of the absorption by a step S2 is noted, corresponding with a substantially better purity of the final product. A similar effect is noticed regarding the transmission at 364 nm as shown in figure 5. Maintaining the product more than four hours at -18°C, sample E, results in a further improvement of the purity of the product.

These chemical measurements were confirmed by a professional tasting panel of ten tasters that provided the following tasting notes and ratings with respect to samples from the batches A-D that were produced.

| *Sample* | *Average Rating* | *Description of the Product* |
|---|---|---|
| Reference Sample (no cold-filtering) | 9,31 | Slightly pronounced, clean aroma of alcohol, non-homogeneous taste, alcoholic aftertaste. Pronounced aroma of alcohol, slightly sweet taste, slightly pungent, clean after-taste. Strongly pronounced aroma of alcohol with a pungent after-taste. Transparent, clear, shiny, clean aroma, characteristic of vodka, clean taste with a slight bite. Characteristic aroma, alcoholic, alcoholic taste, characteristic with a bite in the after-taste. Aroma of alcohol, pungent after-taste, prolonged. |
| A (-4°C, 4 hours) | 9,71 | Papery aroma note+alcohol, rounded taste, after-taste dry too. Aroma close to neutral, medium-mild taste, but with a longer, alcoholic after-taste. Samples A-E have clean, clear colour, clean aroma, characteristic of vodka, without additional notes, taste also without additional notes, a bite characteristic of vodka, short after-taste. Very neutral aroma, mild, sweet taste, short after-taste. Minimal differences among the samples A-E in aroma and taste. Mild, clean aroma, clean taste, with a small bite in the after-taste. Warm aroma, slightly sweet, smooth taste, with a bite in the after-taste. Empty aroma, sharper taste, longer after-taste. |
| B (-10°C, 4 hours) | 9,70 | Strong aroma of alcohol, rather sharp notes of alcohol, bitter. Aroma close to neutral, taste medium-mild, a slight bite in the after-taste. Pronounced aroma of vodka, mild taste, with a slight sharpness. Clean aroma, comparatively less intense, a slight sharpness in the taste in the finish. Aroma more intense, taste slightly sweet, a more lasting sharpness in the after-taste. More pungent taste, longer after-taste. |
| C (-15°C, 4 hours) | 9,73 | Aroma close to neutral, corny notes, taste rounded, smooth, an after-taste characteristic of vodka. Neutral aroma, mild, rounded taste, fiery after-taste. Pronounced aroma, after-taste with a slight bite. Less intense aroma too, very similar to S. 4, with a slight, sharp note in the after-taste. Aroma less warm, of medium intensity, very thick, mild, sweet taste, short, clean after-taste. Clean, well-balanced taste. |
| D (-18°C, 4 hours) | 9,74 | A slight aroma of vodka with the notes of green, fresh grass, taste of vodka with a sharp after-taste. Neutral aroma, mild, sweet taste, after-taste with a slight bite. Light aroma of vodka, mild, well-balanced, rounded taste. Very light, unobtrusive aroma, slight sweetness in the beginning, then a bit pungent, but seemed to have a rich, well-balanced taste. Aroma similar to S. 5, sweet, mild taste, with more pronounced bite. Aroma stronger, sharper, clean taste, a little watery. |
| E (-18°C, 8 hours) | 9,77 | Aroma close to neutral to the aroma of vodka, clean taste, with a slightly viscous (extract-like) hint, with a sharp bite, clean after-taste. Neutral aroma, slightly sweet, rounded taste, short, clean, a bit pungent after-taste. Liked it best of all, short after-taste. Neutral aroma, mild taste, slightly pungent. Clean, almost non-existent aroma of vodka (sweetness), close to sample D: sweetness present in the beginning, then pungent (fiery, clean). The most neutral aroma of all, alcohol is felt less, taste with the least sweetness, mild, the after-taste seems the shortest, mildest of all. Sweeter taste. Typical, very slight aroma, typical, very clean, light taste, the most neutral and mild sample. |

The tasting method was performed according to the GOST 33817-2016 (10 point system)standard to evaluate the organoleptic properties of the different samples. This tasting provides convincing evidence that cold-filtering at -18°C delivers a superb product and that allowing the product to settle for more that four hours, especially for eight hours, before cold-filtering at -18°C or below delivers a vodka product of unprecedented quality, purity and taste.

Although the invention has been described and substantiated with reference to merely a few explanatory comparative examples it will be appreciated that the invention is by no means limited to those examples. On the contrary, many more embodiments and variations are feasible and within the reach of a skilled person without departing from the true scope and spirit of the present invention.

## Claims

1. Process for a production of vodka, comprising mixing water and alcohol to obtain a water-alcohol mixture, cooling down the mixture of water and alcohol to a temperature at least - 10°C, maintaining said mixture at said temperature for several hours before cold-filtering said mixture, **characterized in that** said mixture is cooled down to a temperature of at least approximately -18°C and maintained at said temperature for at least 4 hours, and preferably for about 8 hours, prior to cold-filtering said mixture substantially at said low temperature, particularly over a carbon filter, particularly a Z-carbon filter.

2. The process according to claim 1, **characterized in that** said mixture is maintained at approximately -18°C for about 8 hours before cold-filtering said mixture.

3. The process according to claim 1 or 2, **characterized in that** said mixture has an alcoholic strength by volume of between 37,5 vol% and 50 vol%, particularly of about 40 vol% absolute alcohol.

4. The process according to claim 1, 2 or 3, **characterized in that** sugar is added to the mixture after filtration.

5. The process according to claim 4, **characterized in that** said mixture consists of merely:
- a percentage of absolute alcohol in water of between about 37,5 vol% and 50 vol%, particularly around 40 vol% absolute alcohol; and
- between 1 and 2 g/l sugar, particularly about 1,2 g/l sugar.

6. The process according to any of the preceding claims **characterized in that** said obtained mixture is filtered at room temperature prior to bottling, particularly over a series of micro-filters.

7. The process according to any of the preceding claims, **characterized in that** said mixture is maintained in an isolated tank at said low temperature and **in that** said mixture is allowed to gradually adapt to room temperature in a non-isolated tank after pumping said mixture from said isolated tank to said non-isolated tank.

8. The process according to anyone of the preceding claims, **characterized in that** water with an alkalinity of less than 3 meq/l is applied as said water.

9. The process according to anyone of the preceding claims, **characterized in that** the cooled down mixture is cold-filtered through a Z-carbon filter comprising activated carbon.
